Europäisches Patentamt

European Patent Office

Office européen des brevets

(11) Veröffentlichungsnummer: **0 431 318 A2**

## (12) EUROPÄISCHE PATENTANMELDUNG

(21) Anmeldenummer: 90121093.0

(22) Anmeldetag: 03.11.90

(51) Int. Cl.⁵: **F42B 15/04**

(30) Priorität: 07.12.89 DE 3940467

(43) Veröffentlichungstag der Anmeldung:
**12.06.91 Patentblatt 91/24**

(84) Benannte Vertragsstaaten:
**FR GB IT**

(71) Anmelder: **TELEFUNKEN SYSTEMTECHNIK
GMBH
Sedanstrasse 10
W-7900 Ulm (Donau)(DE)**

(72) Erfinder: **Tegel, Marek, Dr.-Ing.**

**verstorben(DE)**
Erfinder: **Wenzel, Dieter, Dipl.-Ing.
Kamperrege 23
W-2081 Haseldorf(DE)**

(74) Vertreter: **Salhoff, Roland, Dipl.-Ing.
TELEFUNKEN SYSTEMTECHNIK GMBH
Postfach 17 30
W-7900 Ulm (Donau)(DE)**

(54) **Lenkkabelschutz für Luftraketen.**

㉗
2.1 Der Erfindung liegt die Aufgabe zugrunde, ein Glasfaserlenkkabel gegenüber thermischen Belastungen zu schützen, die beim Starten einer kabelgesteuerten Luftrakete durch die Rückstoßgase auftreten.
2.2 Diese Aufgabe wird erfindungsgemäß dadurch gelöst, daß das zum Steuern der Rakete benutzte Glasfaserkabel (1) einen Flüssigkeitsträger (2) aufweist und vor dem Abspulen in einer mit Flüssigkeit gefüllten Spulenkammer (3) gelagert ist.
2.3 Die Erfindung findet Anwendung bei einer Luftrakete, die aus einer Abschußvorrichtung gestartet und kabelgesteuert ins Ziel gelenkt wird.

Fig. 1

EP 0 431 318 A2

## "LENKKABELSCHUTZ FÜR LUFTRAKETEN"

Die Erfindung betrifft einen Lenkkabelschutz für Luftraketen gemäß den Merkmalen des Oberbegriffs des Anspruchs 1.

Um den Lenkdraht von drahtgesteuerten Waffen zu schützen, ist es üblich den Daht mit einer flexiblen Schutzhülle zu überziehen, die ihn gegen Beschädigungen der verschiedensten Art schützt. Ein Beispiel für einen derartigen Lenkdrahtschutz an einem Torpedo ist in der britischen Patentschrift 12 14 801 gezeigt.

Der Erfindung liegt die Aufgabe zugrunde, ein Glasfaserlenkkabel gegenüber thermischen Belastungen zu schützen, die beim Starten einer kabelgesteuerten Luftrakete durch die Rückstoßgase auftreten.

Diese Aufgabe wird erfindungsgemäß durch die im Kennzeichen des Anspruchs 1 angegebenen Merkmale gelöst.

Die Erfindung bietet einen einfachen und kostengünstigen Schutz gegenüber thermischen Überlastungen des Glasfaserkabels. Der Aufwand für die Erzeugung des erfindungsgemäßen Lenkdrahtschutzes steht in einem optimalen Verhältnis zu der damit erzielten Schutzwirkung. Die poröse Ummantelung des Glasfaserkabels hat im Vergleich zu einer massiven Ummantelung nur eine geringe Gewichtszunahme zur Folge.

Weiterbildungen der Erfindung sind in den Unteransprüchen angegeben. Es sind dort weitere gewichtssparende und kostensenkende Lösungsmerkmale aufgezeigt.

Anhand der Zeichnung wird ein Ausführungsbeispiel der Erfindung näher erläutert.

Fig. 1    zeigt ein erfindungsgemäßes Schutzsystem und

Fig. 2    verschiedene Arten eines Flüssigkeitsträgers für Lenkkabel

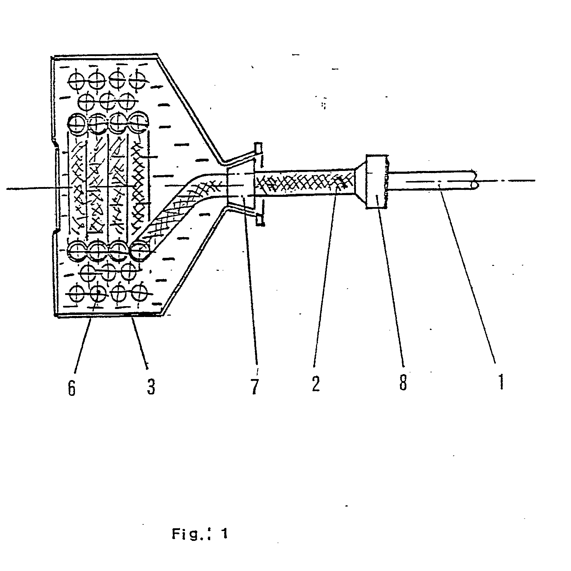

Das in Fig. 1 gezeigte Schutzsystem besteht aus einer Spulenkammer 3, der Lenkkabelspule 6, einer flüssigkeitsaufsaugenden Ummantelung 2 für das Glasfaserkabel 1, einem Verschluß 7 und einem Befestigungsflansch 8.

Die Lenkkabelspule 6 ist in der mit Wasser gefüllten Spulenkammer 3 gelagert. Das aus einem Glasfaserkabel 1 bestehende Lenkkabel ist mit einer hydrophilen Textilgewebe-Ummantelung 2 versehen.

Die Ummantelung 2 erstreckt sich über den Teil der Lenkkabelspule 6, der zuerst abgespult wird und mit den Rückstoßgasen der Starttriebwerke in Berührung kommt. Die Spulenkammer 3 ist vor dem Abheben der startenden Rakete mit einem Verschluß 7 verschlossen, durch den das ummantelte Lenkkabel mit einer Länge hindurchtritt, die ein Anschluß des Lenkkabels an die Luftrakete (wenn die Spulenkammer 3 in der Raketenabschußvorrichtung zurückbleibt) oder an die Raketenabschußvorrichtung (wenn die Spulenkammer 3 in der Rakete aufgenommen ist) ermöglicht. Dieser Anschluß erfolgt mit einem Befestigungsflansch 8. Die abhebende Luftrakete zieht den an der Ummantelung 2 befestigten Verschluß 7 aus der Öffnung in der Spulenkammer 3, so daß der Rest des Lenkkabels umgehindert abspulen kann.

Die Schutzwirkung des Lenkkabels gegen thermische Überlastung wird dadurch erzielt, daß die in der Ummantelung 2 aufgenommene Flüssigkeit in den Rückstoßgasen verdunstet und daß durch die dadurch entstehende Verdunstungskälte das Glasfaserkabel geschützt ist.

Auf der Basis der erfindungsgemäßen Lösung ist auch ein Schutzsystem denkbar, bei dem das ummantelte Lenkkabel vor dem Austritt aus der Spulenkammer 3 durch ein Flüssigkeitsbad gezogen wird und daß die restliche Spulenkammer luftgefüllt ist.

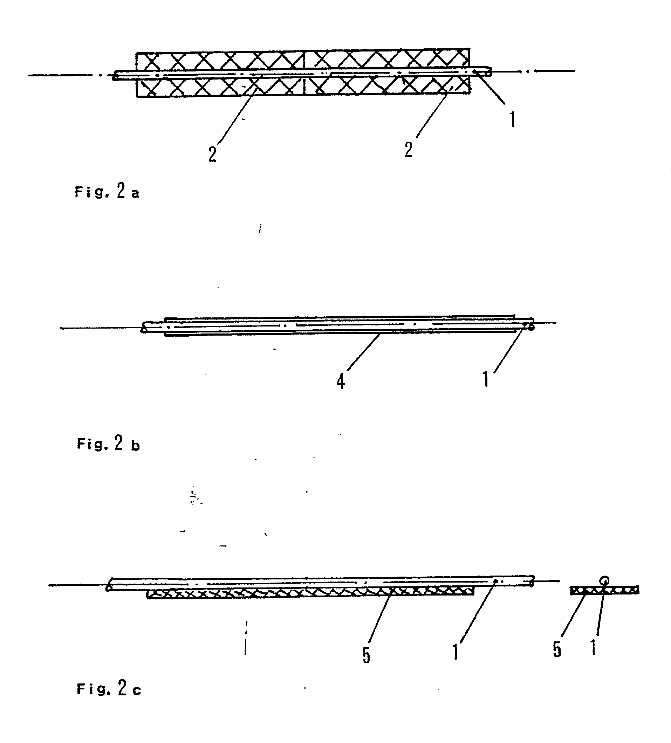

Fig. 2 zeigt unterschiedliche Ausführungen des Flüssigkeitsträgers 2. In Fig. 2a besteht der Flüssigkeitsträger 2 aus offenporigen Schaumstoffröhrchen die sich mit Flüssigkeit vollsaugen. Fig. 2c zeigt eine dünne Benetzungsschicht 4 auf der Oberfläche des Glasfaserkabels, an der Flüssigkeit haften bleibt. Diese Schicht kann z. B. als Aufdampfschicht auf das Glasfaserkabel 1 aufgebracht sein.

Fig. 2c zeigt einen Flüssigkeitsträger 2 der als Trägerband 5 für das Glasfaserkabel 1 ausgeführt ist. Das Flachband hat die Fähigkeit Flüssigkeit aufzusaugen und kann z. B. aus offenporigem Schaum oder textilem Gewebe bestehen.

### Ansprüche

1. Lenkkabelschutz für eine Luftrakete, die aus einer Abschußvorrichtung gestartet und kabelgesteuert ins Ziel gelenkt wird, dadurch gekennzeichnet, daß das zum Steuern der Rakete benutzte Glasfaserkabel (1) einen Flüssigkeitsträger (2) aufweist und vor dem Abspulen in einer mit Flüssigkeit gefüllten Spulenkammer (3) gelagert ist.

2. Lenkkabelschutz nach Anspruch 1, dadurch gekennzeichnet, daß der Flüssigkeitsträger (2) aus offenporigen Schaumstoffröhrchen besteht, die über das Glasfaserkabel (1) geschoben sind.

3. Lenkkabelschutz nach Anspruch 1, dadurch gekennzeichnet, daß der Flüssigkeitsträger (2) aus einer textilen Gewebeummantelung besteht.

4. Lenkkabelschutz nach Anspruch 1, dadurch gekennzeichnet, daß der Flüssigkeitsträger (2) als eine dünne Benetzungsschicht (4) auf das Glasfaserkabel (1) aufgebracht ist.

5. Lenkkabelschutz nach Anspruch 1, dadurch gekennzeichnet, daß das Glasfaserkabel (1) auf ein flüssigkeitsaufsaugendes Trägerband (5) aufgebracht ist.

6. Lenkkabelschutz nach einen der Ansprüche 1 bis 5, dadurch gekennzeichnet, daß das Glasfaserkabel (1) nur auf der für die Startphase benötigten Länge mit den flüssigkeitsaufsaugenden oder benetzenden Schutzmitteln (2, 4 , 5) versehen ist.

Fig.: 1

6    3        7    2        8        1

4

Fig. 2 a

Fig. 2 b

Fig. 2 c